# EUROPÄISCHE PATENTSCHRIFT

(11) **EP 0 648 785 B1**
(45) Veröffentlichungstag und Bekanntmachung des Hinweises auf die Patenterteilung: **04.08.1999**
(21) Anmeldenummer: 94115718.2
(22) Anmeldetag: 06.10.1994
(51) Int. Cl.: C08F 8/12, C08F 210/02

(54) **Verfahren zur Herstellung von carboxylgruppenhaltigen Copolymerisaten des Ethylens**
Process for the preparation of copolymers of ehtylene containing carboxylic groups
Procédé de préparation de copolymères d'éthylène comportant des groupements carboxyliques

(30) Priorität: 13.10.1993 DE 4334846
(43) Veröffentlichungstag der Anmeldung: 19.04.1995
(73) Patentinhaber: BASF Aktiengesellschaft, 67063 Ludwigshafen (DE)
(72) Erfinder: Deckers, Andreas, Dr., D-55234 Flomborn (DE); Schlund, Rüger, Dr., D-67069 Ludwigshafen (DE); Klimesch, Roger, Dr., D-64665 Alsbach-Hähnlein (DE)

(56) Entgegenhaltungen:
- FR-A- 2 567 894
- GB-A- 2 065 667
- US-A- 4 638 034
- CHEMICAL ABSTRACTS, vol. 82, no. 22, 2. Juni 1975, Columbus, Ohio, US; abstract no. 140828u, RAETZSCH M. 'Complete or partial alcoholization or saponification of ethylene copolymers' Seite 24 ;Spalte 1 ; & DE-A-107 938

## Beschreibung

Die vorliegende Erfindung betrifft ein verbessertes Verfahren zur Herstellung von carboxylgruppenhaltigen Copolymerisaten des Ethylens durch polymeranaloge pyrolytische Esterspaltung von Copolymerisaten, aus
a) 60 bis 99,9 mol-% Ethylen,
b) 0,1 bis 40 mol-% (C₄- bis C₈-tert.-Alkyl)estern von copolymerisierbaren C₃- bis C₁₂- Carbonsäuren und
c) 0 bis 20 mol-% weiterer copolymerisierbarer Monomeren.

Es sind verschiedene Verfahren zur Herstellung von carboxylgruppenhaltigen Copolymerisaten des Ethylens, die im folgenden kurz als "Polycarbonsäuren" bezeichnet werden, bekannt.

Man kann diese Polycarbonsäuren direkt durch Polymerisation eines Gemisches aus Ethylen und ungesättigten Carbonsäuren bei hohen Drucken und Temperaturen erhalten (vgl. z.B. DE-A 2 400 978 und DE-A 1 669 685). Nachteile dieses Verfahrens sind die hohe korrosive Beanspruchung von Anlagenteilen und die Verfärbung der Produkte.

Aus der US-A 3 132 120 ist bekannt, aus Ethylen und einem tert.-Butylester einer ethylenisch ungesättigten Carbonsäure durch radikalische Polymerisation ein tert.-Butoxycarbonylgruppenhaltiges Copolymerisat herzustellen und es in einem zweiten Verfahrensschritt durch pyrolytische Esterspaltung bei Temperaturen von 275 bis 350°C unter Ausschluß von Sauerstoff polymeranalog zur Polycarbonsäure umzusetzen.

Die DE-A 1 720 335 beschreibt ein Verfahren, bei dem man Gemische aus Ethylen und C₃- bis C₁₂-Alkencarbonsäuren, die mit C₃- bis C₈ sec.- bzw. C₄- bis C₈-tert. Alkoholen verestert sind, in Gegenwart von organischen Sulfonsäuren und radikalischen Initiatoren bei Temperaturen von 110 bis 350°C und Drücken von 100 bis 8000 bar polymerisiert, wobei gleichzeitig die Schutzgruppen abgespalten werden und wobei man die Polycarbonsäuren direkt erhält.

Die Qualität der nach diesen Verfahren erhältlichen Polycarbonsäuren ist jedoch für bestimmte Anwendungsgebiete wie die Klebstoff- oder Folienherstellung unzureichend, weil die Produkte Gelpartikel und Stippen aufweisen.

Verbesserte Produkte lassen sich nach dem in der DE-A 2 937 239 beschriebenen Verfahren herstellen, bei dem Copolymerisate, die Ethylen und eine mit einem C₃- bis C₈-sec. bzw. C₄- bis C₈-tert. Alkohol veresterte C₃- bis C₁₂-Alkencarbonsäure enthalten, in einem Lösungsmittel suspendiert werden und die Estergruppen bei Temperaturen zwischen 40 und 75°C in Gegenwart saurer Katalysatoren wie Schwefelsäure oder organischen Sulfonsäuren gespalten werden. Bei diesem Verfahren fallen jedoch große Mengen an verunreinigten Lösungsmitteln an, die kostenintensiv aufgearbeitet und entsorgt werden müssen.

Der Erfindung lag daher die Aufgabe zugrunde, ein Verfahren zur Herstellung von Polycarbonsäuren bereitzustellen, welches die genannten Nachteile nicht aufweist.

Demgemäß wurde ein verfahren zur Herstellung von carboxylgruppenhaltigen Copolymerisaten des Ethylens durch polymeranaloge pyrolytische Esterspaltung von Copolymerisaten, aus
a) 60 bis 99,9 mol-% Ethylen,
b) 0,1 bis 40 mol-% (C₄- bis C₈-tert.-Alkyl)estern von copolymerisierbaren C₃- bis C₁₂- Carbonsäuren und
c) 0 bis 20 mol-% weiterer copolymerisierbarer Monomeren gefunden, wobei man die pyrolytische Esterspaltung in Substanz bei Temperaturen von 150 bis 250 °C in Gegenwart organischer Sulfonsäuren bei einer Konzentration von Initiatoren für Radikalreaktionen von bis zu 1 mol-ppm durchführt.

Als Ausgangsstoffe zur Herstellung der Polycarbonsäuren nach dem erfindungsgemäßen Verfahren können tert.-alkoxycarbonylgruppenhaltige Copolymerisate des Ethylens eingesetzt werden, die beispielsweise aus der DE-A 2 937 239 bekannt sind.

Vorzugsweise sind sie aufgebaut aus
a) 60 bis 99,9, bevorzugt 90 bis 99,9, besonders 95 bis 99,9 mol-% Ethylen,
b) 0,1 bis 40, bevorzugt 0,1 bis 10, besonders 0,1 bis 2,5 mol-% (C₄- bis C₈-tert.-Alkyl)estern von copolymerisierbaren ungesättigten C₃- bis C₁₂-Carbonsäuren und
c) 0 bis 20, bevorzugt 0 bis 9,9, besonders 0 bis 2,5 mol-% weiterer copolymerisierbarer Monomeren.

Vorzugsweise leiten sich die Ester b) von der Crotonsäure, Isocrotonsäure, Vinylessigsäure und besonders von der Acrylsäure und der Methacrylsäure ab. In zweiter Linie kommen auch Ester ungesättigter mehrwertiger Carbonsäuren wie Maleinsäure, Fumarsäure und Norbornen-2,3-dicarbonsäure in Betracht.

Diese Säuren sind mit tertiären einwertigen Alkoholen mit 4 bis 8 Kohlenstoffatomen verestert. Beispiele für geeignete Alkohole sind tert.-Butylalkohol und tert.-Amylalkohol.

Besonders bevorzugte Ester sind Acryl- und Methacrylsäure-tert.-butylester.

Weitere copolymerisierbare Monomere (c) sind im allgemeinen solche, die mit Ethylen copolymerisiert werden können. Es kommen Kohlenwasserstoffe mit C=C-Doppelbindungen wie C₃- bis C₁₀-Alkene, beispielsweise Propen, Butene, Pentene, Hexene, wobei die Alk-1-ene bevorzugt sind, Cycloalkene wie Cyclopentene, Cyclohexene und Norbornene, Styrol und copolymerisierbare Styrolderivate wie α-Methylstyrol außerdem Ester, die aus den vorher genannten ungesättigten Carbonsäuren und sekundären Alkoholen mit 3 bis 10 Kohlenstoffatomen, insbesondere Isopropylalkohol, und primären Alkoholen mit 1 bis 10 Kohlenstoffatomen zusammengesetzt sind sowie weitere funktionelle Derivate der vorher genannten ungesättigten Carbonsäuren, z.B. Amide, Anhydride und Nitrile in Betracht.

Außer Verbindungen mit C=C-Doppelbindungen können auch andere copolymerisierbare Stoffe wie Kohlenmonoxid und Schwefeldioxid als Comonomere c) eingesetzt werden.

Als Comonomere c) weniger bevorzugt, jedoch grundsätzlich ebenfalls möglich ist der Einsatz der Alkencarbonsäuren, deren Ester als Komponente b) eingesetzt werden.

Die tert.-alkoxycarbonylgruppenhaltigen Copolymerisate können auch dann Carbonsäuregruppen enthalten, wenn keine Alkencarbonsäuren als Monomeren eingesetzt werden, da unter den Bedingungen der Polymerisation bereits ein Teil der Estergruppen gespalten werden kann. Der Anteil der Carbonsäuregruppen im Polymerisat ist im allgemeinen für die Ausführung des erfindungsgemäßen Verfahrens nicht von Bedeutung.

Die Polymerisation kann üblicherweise nach Verfahren vorgenommen werden, die bei der Herstellung von Hochdruckpolyethylen allgemein angewendet werden (vgl. Ullmanns Encyclopädie der technischen Chemie, Band 19, 4. Auflage, S. 169-175). Sie wird zweckmäßigerweise in Autoklaven oder Röhrenreaktoren bei Temperaturen von 110 bis 350°C und Drücken von 100 bis 8000 bar durchgeführt.

Als Polymerisationsinitiatoren kommen alle diejenigen in Betracht, die in der Lage sind, eine radikalische Polymerisation auszulösen wie Azoverbindungen, z.B. Azobuttersäuredinitril und Derivate, Peroxide, z.B. tert.-Butylperbenzoat, Di-tert.-butylperoxid und Dilauroylperoxid und bevorzugt Sauerstoff. Diese Stoffe werden in Mengen von 2 bis 200 Mol-ppm bezogen auf das zu polymerisierende Ethylen eingesetzt.

Die Polymerisation wird vorzugsweise nach der Methode der Substanz-Fällungspolymerisation durchgeführt, es können jedoch auch Lösungsmittel, die zusätzlich als Molekulargewichts-Regler wirken, wie Alkohole, z.B. Methanol und Ethanol, Ether, z.B. Diethylether, Ketone, z.B. Aceton und Butanon sowie aliphatische Kohlenwasserstoffe mitverwendet werden. Die Regelung des Molekulargewichts kann auch mit Wasserstoff vorgenommen werden.

Nach dem erfindungsgemäßen Pyrolyseverfahren werden die tert.-alkoxycarbonylgruppenhaltigen Copolymerisate des Ethylens polymeranalog in die Polycarbonsäuren und die Alkene gespalten.

Als Pyrolysekatalysator werden dem Copolymerisat organische Sulfonsäuren zugegeben. Hierfür eignen sich im allgemeinen aliphatische, aromatische und araliphatische Mono- oder Polysulfonsäuren mit üblicherweise einem bis 20 Kohlenstoffatomen. Ferner können die Sulfonsäuren auch Reste wie Nitrogruppen oder Halogen tragen. Beispielhaft seien Methansulfonsäure, Ethansulfonsäure, p-Toluolsulfonsäure, Naphthalinsulfonsäure, m-Benzoldisulfonsäure, Benzol-1,3,5-trisulfonsäure, p-Bromsulfonsäure und Trifluormethansulfonsäure genannt.

Das molare Verhältnis der organischen Sulfonsäuren, bezogen auf die tert.-Alkoxycarbonylgruppen, sollte von 0,0001 : 1 bis 1 : 1, bevorzugt 0,001 : 1 bis 0,01 : 1 betragen.

Die pyrolytische Esterspaltung erfordert im allgemeinen Temperaturen von 150 bis 250, bevorzugt von 180 bis 220°C und üblicherweise Reaktionszeiten von 0,5 bis 10, bevorzugt von 0,5 bis 5 Minuten.

Um bei der polymeranalogen Esterspaltung einen vollständigen Umsatz zu erreichen, sollten, wenn eine relativ niedrige Temperatur innerhalb des angegebenen Temperaturbereiches gewählt wird, die Reaktionszeiten innerhalb des genannten Zeitintervalls relativ lang gewählt werden. In gleicher Weise kann man relativ kurze Reaktionszeiten durch relativ hohe Reaktionstemperaturen kompensieren. Besonders bevorzugt kombiniert man Reaktionszeiten von 0,5 bis 1 Minuten mit Reaktionstemperaturen von 200 bis 220°C.

Die erfindungsgemäße pyrolytische Esterspaltung sollte unter praktischer Abwesenheit von denen zur Initiierung der Polymerisation eingesetzten Verbindungen und sonstigen Initiatoren für Radikalreaktionen durchgeführt werden. Der Gehalt derartiger Verbindungen im Copolymerisat liegt günstigerweise unter 1 mol-ppm und bevorzugt unter 0,5 mol-ppm. Auch bei Gehalten von 0,5 bis 1 mol-ppm an Initiatoren werden noch Produkte mit einem befriedigenden Qualitätsniveau erhalten.

Etwaige im Polymerisat verbliebene Reste der im Polymerisationsschritt zugesetzten Initiatoren lassen sich im allgemeinen jedoch nach üblichen Methoden leicht entfernen bzw. zerstören, z.B. indem man das Polymerisat vor der Zugabe der organischen Sulfonsäure unter Ausschluß von Sauerstoff auf die gewünschte Pyrolysetemperatur erhitzt.

Die erfindungsgemäße pyrolytische Esterspaltung wird in Substanz durchgeführt. Die Reaktionsbedingungen lassen sich im allgemeinen hierbei besonders günstig in einem Extruder aufrecht erhalten. Es handelt sich hierbei vorzugsweise um einen Zweiwellenextruder, bei dem das sich bildende Alken durch Entgasungsöffnungen austreten kann. Gegebenenfalls kann nach erfolgter Umsetzung durch zusätzliche Dampfeinspeisung die Sulfonsäure aus dem Polymerisat entfernt werden.

Das erfindungsgemäße Pyrolyseverfahren ermöglicht die praktisch vollständige polymeranaloge Esterspaltung der tert.-alkoxycarbonylgruppenhaltigen Copolymerisate unter milderen Bedingungen als nach dem Stand der Technik. So können Nebenreaktionen, die zu Veränderungen an der Polymerhauptkette führen und die insbesondere durch hohe Temperaturen oder die Anwesenheit von radikalischen Initiatoren begünstigt sind, vermieden werden. Die Bildung von farbgebenden Komponenten und gelartigen Produkten wird weitgehend verhindert, wodurch man nahezu stippenfreie und farblose Polycarbonsäuren erhält.

Derartige Polycarbonsäuren ließen sich bisher nicht nach Verfahren herstellen, bei denen alle Verfahrensschritte in Substanz durchgeführt werden können, sondern sie erforderten den Einsatz von Lösungsmitteln, die anschließend aus dem Produkt entfernt und entweder gereinigt oder entsorgt werden mußten.

Die nach dem erfindungsgemäßen Verfahren hergestellten Produkte lassen sich zu Folien verarbeiten und finden als Klebstoffe oder Pulverbeschichtungsmittel Anwendung.

### Beispiele

### Herstellung der alkoxycarbonylgruppenhaltigen Copolymerisate des Ethylens

### Polymerisat A

In einem Rohrreaktor wurde bei einer Temperatur von 280°C und einem Druck von 2400 bar kontinuierlich eine Mischung aus 98,6 Gew.-Teilen Ethylen, 0,65 Gew.-Teilen tert.-Butylacrylat und 0,75 Gew.-Teilen Isobuten in Gegenwart von 31 Mol-ppm Sauerstoff, bezogen auf das eingesetzte Ethylen, polymerisiert. Das erhaltene Polymerisat war aus 96,6 mol-% Ethylen, 1,7 mol-% tert.-Butyl-acrylat und 1,7 mol-% Acrylsäure aufgebaut.

### Polymerisat B

Die bei der Herstellung von Polymerisat A gewählten Polymerisationsbedingungen wurden dahingehend abgewandelt, daß die Polymerisationstemperatur 220°C betrug.

### Polymeranaloge Esterspaltung der tert.-Alkoxycarboxylgruppen tragenden Copolymerisate des Ethylens

Verfahrensparameter der Beispiele 1 bis 3, 4V und 5V sind in der Tabelle aufgeführt.

### Beispiel 1 bis 3 (erfindungsgemäß)

Das Polymerisat A bzw. B wurde aufgeschmolzen und in einem Zweiwellenextruder (Modell ZSK-30 der Fa. Werner & Pfleiderer) zusammen mit der Sulfonsäure extrudiert und anschließend granuliert. Die mittlere Verweilzeit des Polymerisates im Extruder betrug 5 Minuten.

### Beispiel 4V (Vergleichsversuch)

Dieser Versuch unterschied sich von den Beispielen 1 bis 3 darin, daß bei der Extrusion keine Sulfonsäure zugegeben wurde.

Copolymerisation von Ethylen mit ungesättigten tert.-Alkylcarbonsäureestern und Esterspaltung in einem Schritt.

### Beispiel 5V (Vergleichsbeispiel, Polymerisat C)

Der Versuch wurde nach der Herstellvorschrift für Polymerisat A durchgeführt, jedoch wurden der Monomerenmischung 0,5 Gew.-% p-Toluolsulfonsäure (TSS), bezogen auf die Monomeren, hinzugefügt. Das Polymerisat wurde anschließend, wie bei Beispiel 1 bis 3 beschrieben, extrudiert, jedoch ohne daß zusätzlich Sulfonsäure zugesetzt worden wäre.

### Prüfung der Polymer-Eigenschaften

Der Acrylsäuregehalt wurde IR-spektroskopisch durch quantitative Auswertung der Bande bei 940 cm⁻¹ bestimmt. Die im Polymerisat enthaltene Gesamtmenge an Carboxylgruppen (Säuregehalt, angegeben in mol-%) bezieht sich auf die Gesamtmenge an den im Copolymerisat enthaltenen Carboxy- und tert-Alkoxycarbonylgruppen.

Der melt flow index (MFI) dient als Anhaltswert für das Fließverhalten bei Verarbeitungsprozessen mit höherer Schergeschwindigkeit wie Spritzgießen und Extrudieren. Eine geschmolzene Probe wird bei 190°C und einer Belastung von 2,16 kg durch die Düse des Schmelzindex-Prüfgerätes nach DIN 53 735 gedrückt. Der MFI wird in g/10 min angegeben und entspricht der Masse des Schmelzestranges, der in 10 min durch die Düse gepreßt wird.

Die Polymerisate wurden auf ihre Eignung zur Herstellung von Folien untersucht. Hierzu wurden Proben der Polymerisate im Extruder auf 150°C erhitzt und aus der Schmelze 40 µm dicke Filme geblasen. Die Qualität der Filme wurde visuell im Hinblick auf ihren Stippengehalt beurteilt und benotet. Die Notenskala reicht von 1 (keine Stippen) bis 5 (sehr viele Stippen).

Die Prüfergebnisse sind in der Tabelle zusammmengefaßt.

**Tabelle**

| Beispiel | 1 | 2 | 3 | 4V | 5V |
|---|---|---|---|---|---|
| Polymerisat | A | A | B | A | C |
| Sulfonsäure | MSS | TSS | TSS | - | - |
| Sulfonsäuremenge [Gew.-%] | 1,4 | 0,5 | 0,5 | - | - |
| Extrusionstemperatur [°C] | 200 | 200 | 200 | 200 | 200 |
| Säuregehalt [mol-%] | 100 | 100 | 100 | 70 | 100 |
| MFI [g/10 min.] | 6,8 | 6,8 | 7,2 | 3,0 | 3,5 |
| Stippengehalt | 2-3 | 2-3 | 2-3 | 4 | 4 |
| MSS = Methansulfonsäure TSS = p-Toluolsulfonsäure | | | | | |

## Patentansprüche

1. Verfahren zur Herstellung von carboxylgruppenhaltigen Copolymerisaten des Ethylens durch polymeranaloge pyrolytische Esterspaltung von Copolymerisaten, aus
a) 60 bis 99,9 mol-% Ethylen,
b) 0,1 bis 40 mol-% (C₄- bis C₈-tert.-Alkyl)estern von copolymerisierbaren C₃- bis C₁₂- Carbonsäuren und
c) 0 bis 20 mol-% weiterer copolymerisierbarer Monomeren
dadurch gekennzeichnet, daß man die pyrolytische Esterspaltung in Substanz bei Temperaturen von 150 bis 250°C in Gegenwart organischer Sulfonsäuren bei einer Konzentration von Initiatoren für Radikalreaktionen von bis zu 1 mol-ppm durchführt.

2. Verfahren nach Anspruch 1, dadurch gekennzeichnet, daß man die Polymerisate 0,5 bis 5 min bei Temperaturen von 180 bis 220°C pyrolysiert.

3. Verfahren nach Anspruch 1 oder 2, dadurch gekennzeichnet, daß man die Pyrolyse in einem Extruder durchführt.

4. Verfahren nach den Ansprüchen 1 bis 3, dadurch gekennzeichnet, daß man Copolymerisate einsetzt, die aufgebaut sind aus
a) 90 bis 99,9 mol-% Ethylen,
b) 0,1 bis 10 mol-% (C₄- bis C₈-tert.-Alkyl)estern von copolymerisierbaren C₃- bis C₁₂-Carbonsäuren und
c) 0 bis 9,9 mol-% weiterer copolymerisierbarer Monomeren.

## Claims

1. A process for the preparation of carboxyl-containing copolymers of ethylene by polymer-analogous pyrolytic ester cleavage of copolymers composed of
a) from 60 to 99.9 mol% of ethylene,
b) from 0.1 to 40 mol% of C₄-C₈-tert-alkyl esters of copolymerizable C₃-C₁₂-carboxylic acids and
c) from 0 to 20 mol% of further copolymerizable monomers,
wherein the pyrolytic ester cleavage is carried out at from 150 to 250°C in the presence of organic sulfonic acids, in the absence of a solvent and at a concentration of free radical initiators of up to 1 mol ppm.

2. A process as claimed in claim 1, wherein the polymers are pyrolyzed in the course of from 0.5 to 5 minutes at from 180 to 220°C.

3. A process as claimed in claim 1 or 2, wherein the pyrolysis is carried out in an extruder.

4. A process as claimed in any of claims 1 to 3, wherein copolymers which are composed of
a) from 90 to 99.9 mol% of ethylene,
b) from 0.1 to 10 mol% of C₄-C₈-tert-alkyl esters of copolymerizable C₃-C₁₂-carboxylic acids and
c) from 0 to 9.9 mol% of further copolymerizable monomers are used.

## Revendications

1. Procédé pour préparer des copolymères de l'éthylène à groupes carboxyle par scission pyrolytique des fonctions esters, réalisée sur les polymères eux-mêmes, de copolymères de
a) 60 à 99,9 mol % d'éthylène,
b) 0,1 à 40 mol % d'esters tert-alkyliques en C4-C8 d'acides carboxyliques copolymérisables en C3-C12 et
c) 0 à 20 ml % d'autres monomères copolymérisables,
caractérisé par le fait que la scission pyrolytique des fonctions esters est réalisée en masse à des températures de 150 à 250°C en présence d'acides organiques sulfoniques à une concentration en inducteurs des réactions radicalaires allant jusqu'à 1 mol-ppm.

2. Procédé selon la revendication 1, caractérisé par le fait que l'on pyrolyse les polymères pendant une durée de 0,5 à 5 minutes à des températures de 180 à 220°C.

3. Procédé selon la revendication 1 ou 2, caractérisé par le fait que l'on procède à la pyrolyse dans une extrudeuse.

4. Procédé selon les revendications 1 à 3, caractérisé par le fait que l'on met en oeuvre des copolymères constitués de
a) 90 à 99,9 mol % d'éthylène,
b) 0,1 à 10 moi % d'esters tert-alkyliques en C4-C8 d'acides carboxyliques copolymérisables en C3-C12 et
c) 0 à 9,9 moi % d'autres monomères copolymérisables.
